Europäisches Patentamt

(19) European Patent Office

Office européen des brevets

(11) Numéro de publication: **0 1 10 766**
**B1**

(12) FASCICULE DE BREVET EUROPEEN

(45) Date de publication du fascicule du brevet:
24.06.87

(21) Numéro de dépôt: **83402231.1**

(22) Date de dépôt: **18.11.83**

(51) Int. Cl.⁴: **B 64 C 11/18**

(54) **Pale pour propulseur d'aéronef.**

(30) Priorité: **18.11.82 FR 8219337**

(43) Date de publication de la demande:
**13.06.84 Bulletin 84/24**

(45) Mention de la délivrance du brevet:
**24.06.87 Bulletin 87/26**

(84) Etats contractants désignés:
**DE GB IT**

(56) Documents cités:
**FR - A - 2 463 054**

(73) Titulaire: **Office National d'Etudes et de Recherches Aerospatiales (O.N.E.R.A.), 29 Avenue de la Division Leclerc, F-92320 Châtillon-sous-Bagneux (FR)**

(72) Inventeur: **Thibert, Jean-Jacques, 1, Square des Erables, F-91370 Verrieres le Buisson (FR)**
Inventeur: **Bousquet, Jean-Marc, 246, rue de la Convention, F-75015 Paris (FR)**

(74) Mandataire: **Fort, Jacques et al, CABINET PLASSERAUD 84, rue d'Amsterdam, F-75009 Paris (FR)**

## Description

La présente invention concerne les hélices pour propulseurs d'aéronefs et, plus particulièrement, les pales pour de telles hélices.

On sait que le rendement théorique d'une hélice, pour une charge au disque $C = P/D^2$ donné ($P$ étant la puissance sur l'arbre d'hélice et $D$ le diamètre), augmente avec la vitesse de rotation de l'hélice. Mais l'adoption d'une vitesse de rotation élevée se heurte à un problème: la composition de la vitesse due à la rotation de l'hélice et de la vitesse d'avancement de l'aéronef conduit à des nombres de Mach relatifs qui augmentent progressivement depuis l'embase de la pale jusqu'à son extrémité. Sur les hélices classiques, le nombre de Mach atteint fréquemment des valeurs de l'ordre de 0,9, même lorsque les vitesses d'avancement sont modérées, par exemple de l'ordre de $M = 0,6$. A ces nombres de Mach relatifs élevés apparaissent déjà, sur des profils minces classiques, des ondes de choc intenses provoquant le décollement de la couche limite et conduisant à des niveaux de perte élevés. En conséquence, le rendement propulsif des hélices classiques décroît rapidement, à vitesse d'hélice donnée, lorsque la vitesse de l'aéronef augmente, ce qui a conduit à remplacer les propulseurs à hélice par d'autres types de propulseurs, notamment par des turboréacteurs, lorsque la vitesse des aéronefs dépasse $M = 0,65$ environ.

De nombreux travaux ont déjà été effectués pour tenter d'accroître, vers des nombres de Mach plus élevés, le domaine d'utilisation des hélices. On a en particulier proposé d'utiliser des hélices présentant une charge au disque très élevée, comportant un grand nombre de pales dont les parties terminales sont en flèche accusée. On pourra trouver une analyse des travaux effectués sur de telles hélices dans divers documents, notamment dans «Hélices pour vols économiques à grandes vitesses» par Jean-Marc Bousquet, Aéronautique et Astronautique, No 88, 1981-3, pp. 37-51. Les pales de ces hélices ont un profil évolutif depuis l'embase jusqu'à l'extrémité, mais ces profils appartiennent aux séries classiques NACA.

On voit que ces études visent simplement à réduire la vitesse résultante par diminution du diamètre et à transposer au domaine des hélices la forme en flèche des ailes. Elles ne s'attaquent pas à la source même du problème, c'est-à-dire au décollement de la couche limite à vitesse donnée.

La présente invention vise à fournir une pale d'hélice de propulsion répondant mieux aux exigences de la pratique que les pales connues aux nombres de Mach relatifs élevés, notamment entre 0,8 et 0,9. Elle vise plus particulièrement à retarder l'apparition des phénomènes transoniques, tels que la formation d'ondes de choc intenses et le décollement de la couche limite, jusqu'à des nombres de Mach relatifs plus élevés.

Ce résultat est atteint en abandonnant complètement les profils de pale classiques, dans la partie des pales la plus éloignée de l'axe de rotation de l'hélice.

On rappellera à ce sujet quelques définitions pour éviter toute ambiguité: on peut définir un profil de voilure par une loi de variation d'épaisseur et une loi de cambrure le long de la corde c du profil (segment de droite reliant le bord d'attaque au bord de fuite). La ligne moyenne du profil, ou «squelette», est la ligne telle que chacun de ses points est équidistant de l'extrados et de l'intrados du profil. L'épaisseur du profil est, en chaque point de la ligne moyenne, la distance entre l'extrados et l'intrados. La loi d'épaisseur peut être représentée par une courbe tracée dans un système de coordonnées cartésiennes où on porte en abscisses la position de chaque point le long de la corde et, en ordonnées, la demi-épaisseur en ce point. La courbe ainsi obtenue correspond à la moitié d'un profil symétrique conforme à la loi d'épaisseur représentée. D'autres profils d'épaisseur relative $e_{max}/c$ différente peuvent s'en déduire par multiplication des ordonnées par un facteur égal au rapport des épaisseurs maximum $e_{max}$ (au maître couple) du profil à générer et du profil de base.

On connaît déjà des pales d'hélices ayant différents profils le long de la pale. On connaît par ailleurs (FR-A 2 463 054) un profil de pale pour hélicoptère où l'intrados présente une courbure diminuant à partir d'une valeur déterminée depuis le bord d'attaque, jusqu'à une fraction de la longueur de la corde de profil, puis diminuant de façon continue dans une seconde zone faisant suite à la première. Mais cette forme vise à résoudre un problème qui est particulier aux pales d'hélicoptères et qui est entièrement différent de celui rencontré dans le cas d'une hélice purement propulsive: en effet, le profil donné à une pale d'hélicoptère constitue un compromis entre la forme qui serait optimale pour la pale qui avance (et dont la vitesse s'ajoute à celle de l'aéronef) et la nécessité de ne pas trop dégrader les performances de la pale qui recule, pour laquelle la vitesse de l'aéronef se retranche de celle de la pale. Par ailleurs, il est essentiel de noter qu'il n'y a pas de relation directe entre la forme d'intrados d'un profil présentant une cambrure et la loi d'épaisseur du profil.

L'invention propose, pour résoudre le problème particulier d'une hélice propulsive, une pale conforme à la revendication 1.

En appliquant la loi de variation d'épaisseur définie dans la revendication 1 à une pale, on peut obtenir des hélices propulsives possédant des niveaux de rendement élevés, de l'ordre de 85 à 90%, pour des nombres de Mach relatifs à l'extrémité de la pale très supérieurs à ceux utilisés sur les hélices actuelles. On peut en conséquence, pour le même nombre de Mach de croisière, augmenter la vitesse de rotation de l'hélice, ce qui augmente le rendement et diminue le rapport de réduction mécanique entre la sortie du moteur (généralement un turbopropulseur) et l'hélice et procure un gain de masse sur le réducteur. On peut aussi bien, en conservant les vitesses de rotation actuellement utilisées, accroître le nombre de Mach de croisière de l'aéronef et donc la plage d'utilisation des hélices.

Cette loi d'épaisseur sera généralement adoptée uniquement dans la partie externe de la pale, à partir de 60% (et souvent 70% seulement) de l'envergure. La partie interne pourra être constituée par un profil NACA classique et une zone de raccordement progressif.

Le profil de la pale de l'hélice est défini non seulement par la loi de variation d'épaisseur défini ci-dessus, mais aussi par la loi de cambrure de la ligne moyenne du profil. Cette cambrure a un rôle prépondérant sur la portance de la pale. On verra plus loin qu'avec une cambrure appropriée on obtient une valeur excellente du nombre de Mach de divergence de traînée (nombre de Mach à partir duquel la traînée augmente brutalement) pour des niveaux de portance correspondant au régime de croisière de l'aéronef équipé de l'hélice, en même temps que des niveaux de portance maximale élevés pour des nombres de Mach plus faibles, voisins de 0,6 par exemple, ce qui confère à l'hélice comportant des pales suivant l'invention un niveau de rendement également très élevé pour les régimes de décollage et de montée.

Il semble que ces résultats favorables peuvent probablement être attribués notamment à la décroissance approximativement linéaire de la courbure de la courbe de variation de l'épaisseur entre la première zone et le maître couple. Pour un profil dont l'épaisseur relative maximale ne dépasse pas 6% environ et pour les cambrures utilisées, cette décroissance approximativement linéaire permet de contrôler les survitesses à l'extrados et assure une recompression progressive avant le maître couple, évitant ainsi l'apparition d'ondes de choc intenses en écoulement transonique ainsi que le décollement de la couche limite.

Il faut bien noter que cette décroissance approximativement linéaire concerne la courbure de la loi de variation d'épaisseur, et non pas la courbure de l'extrados ou de l'intrados, qui dépendra notamment de la cambrure et de l'épaisseur relative. Ce n'est que dans le cas d'un profil symétrique et pour une épaisseur relative maximale particulière, que la courbure de l'intredos (et de l'extrados coïncide avec celle de la loi d'épaisseur du profil. Chaque profil symétrique peut servir de base pour engendrer une famille de profils en donnant à chaque membre de la famille la loi de courbure correspondante.

La seconde zone, à décroissance approximativement linéaire de la courbure, s'étend avantageusement entre approximativement 8% et 32% de la longueur de la corde et la courbure décroît dans cette seconde zone depuis une valeur de l'ordre de 14 $e_{max}/C$ jusqu'à une valeur sensiblement égale à 1,5$e_{max}/C$, $e_{max}/C$ étant l'épaisseur relative maximale du profil, au maître couple.

Ainsi, dans un mode avantageux de réalisation de l'invention, la partie externe au moins d'une pale d'hélice, présentant une épaisseur relative maximale comprise entre environ 2 et 6%, a un profil dont la loi de variation d'épaisseur le long de la corde comporte une première zone allant du bord d'attaque jusqu'à environ 8% de la longueur de la corde, dans laquelle la courbure décroît rapidement depuis une valeur maximum égale à environ 0,5 $c/(e_{max})^2$ au bord d'attaque jusqu'à une valeur sensiblement égale à 14$e_{max}/C$ à la fin de ladite première zone, suivie d'une seconde zone s'étendant entre environ 8% de la corde et le maître couple (avantageusement à environ 32% de la corde) dans laquelle la courbure décroît linéairement d'une valeur sensiblement égale à 14$e_{max}/C$ jusqu'à une valeur sensiblement égale à 1,5$e_{max}/C$.

La deuxième zone de la loi d'épaisseur est prolongée jusqu'au bord de fuite par une partie de raccordement. Cette partie pourra avantageusement correspondre à une troisième zone et une quatrième zone où les lois d'épaisseur sont différentes. Dans la troisième zone, s'étendant du maître couple jusqu'à 75 à 85% de la corde, la courbure est sensiblement constante, égale à environ 1,5 $e_{max}/C$ dans le cas prévu au paragraphe précédent. Cette troisième zone favorise encore le contrôle de l'écoulement le long du profil aux nombres de Mach élevés. Il en résulte une augmentation de l'étendue de la zone supersonique avec le nombre de Mach, sans accroissement de l'intensité de l'onde de choc de recompression terminant la zone supersonique et, en aval de l'onde de choc, de faibles gradients de recompression qui évitent le décollement de la couche limite.

La quatrième zone, s'étendant de la fin de la troisième zone (typiquement à 80% de la corde) au bord de fuite, comporte une inversion de courbure. Cette évolution particulière de la courbure, dans cette quatrième zone, provoque une réaccélération de l'écoulement dans la partie finale (typiquement à peu près les dix derniers pour cent) de la corde juste avant le bord de fuite, contribuant ainsi à retarder l'apparition des décollements et à obtenir de faibles niveaux de traînée.

A l'effet favorable de la variation de courbure de la loi d'épaisseur dans la seconde zone s'ajoute celui de la première zone, à grand rayon de bord d'attaque et évolution rapide de la courbure. Au total, on réduit les survitesses et le gradient de recompression par rapport à ceux rencontrés sur les profils classiques à faible rayon de bord d'attaque, tels que ceux de la série NACA 16 dont l'emploi a été suggéré sur la moitié externe des pales d'hélices transoniques. On retarde ainsi le décollement de bord d'attaque caractéristique des profils minces et on obtient des coefficients de portance maximale supérieurs à ceux des profils classiques.

Comme on l'a indiqué plus haut, le profil d'une pale est défini non seulement par la loi de variation d'épaisseur qui vient d'être considérée, mais aussi par sa cambrure. Etant donné que la loi de variation d'épaisseur définie plus haut permet d'obtenir des niveaux de coefficient de portance supérieurs à ceux des profils classiques, on peut adopter un squelette présentant une cambrure maximale inférieure à celle d'un profil classique, pour un coefficient de portance maximale donné. En règle générale, la cambrure maximale $a_p$ du squelette d'un profil selon l'invention pourra être choisie entre 0,75 et $0,85a_c$ (typiquement approximativement $0,82a_c$), $a_c$ représentant la cambrure maximale du squelette d'un profil classique, par exemple NACA série 16.

Il sera en général avantageux d'adopter une loi de cambrure le long de la corde représentant la forme du squelette, décomposée en trois zones successives correspondant respectivement aux portions:

– entre le bord d'attaque (point de courbure maximale) et un point de cambrure maximale;

– entre le point de cambrure maximale et un point situé à environ 65% de la corde;

– entre ce dernier point et le bord de fuite.

Le point de cambrure maximale est situé avantageusement dans une plage s'étendant sur 10% de la corde autour du maître couple. Il pourra être situé approximativement à 35% de la corde à partir du bord d'attaque, alors qu'on est généralement conduit à placer la cambrure maximale $a_c$ des profils classiques de la série NACA 16 à 50% de la corde; la cambrure maximale correspondante pourra être de l'ordre de 0,0136 C. Du fait de la diminution de la cambrure maximale et de son report vers l'avant, le profil selon l'invention présente, pour un coefficient de portance maximale au moins égal aux coefficients de portance maximaux des profils classiques, un coefficient de moment $c_m$ plus faible, ce qui diminue les efforts de torsion de la pale préjudiciables à sa tenue mécanique.

Une fois un certain nombre de profils type déterminés, pour une épaisseur relative maximale déterminée (égale à 3,5% par exemple), on peut déduire aisément d'autres profils conformes à l'invention dont l'épaisseur relative maximale est comprise entre 2 et 6%, par simple multiplication des ordonnées par le rapport de l'épaisseur relative maximale désirée à la valeur 0,035.

Pour faciliter le tracé de profils conformes à l'invention, il est avantageux de définir la loi d'épaisseur et le squelette par des fonctions de la forme $Y = f(X)$ permettant de restituer les caractéristiques particulières des différentes zones successives du profil. On peut en particulier utiliser des fonctions polynominales d'ordre suffisant.

L'invention sera mieux comprise à la lecture de la description qui suit d'une installation qui en constitue un mode particulier de réalisation, donné à titre d'exemple non limitatif. La description se réfère aux dessins qui l'accompagnent, dans lesquels:

la fig. 1 est une courbe représentative de la loi d'épaisseur d'un profil symétrique suivant l'invention, la demi-épaisseur étant portée en ordonnées en fonction de la distance au bord d'attaque le long de la corde C (exprimée en % de la corde) portée en abscisses;

la fig. 2 est une vue agrandie de la région indiquée en 2 sur la fig. 1, au voisinage du bord d'attaque;

la fig. 3 montre la variation de la courbure $C_{ep}$ de la loi d'épaisseur en fonction de l'abscisse réduite X/C le long de la corde, les échelles étant en racine carrée pour faciliter la représentation (les parties de la courbe au-dessus et au-dessous de l'axe des abscisses correspondant à des courbures de signes opposés);

la fig. 4 est un diagramme montrant la répartition de pression Kp le long de l'extrados ou de l'intrados d'un profil symétrique (squelette rectiligne) de 3,5% d'épaisseur relative à variation d'épaisseur selon l'invention (courbe O) et d'un profil symétrique de 3,5% d'épaisseur relative de variation d'épaisseur conforme au profil NACA 16 (courbe P) pour un nombre de Mach de 0,88 et un coefficient de portance $C_z$ nul;

la fig. 5 est un diagramme montrant la répartition de pression Kp le long de l'extrados ou de l'intrados d'un profil symétrique de 3,5% d'épaisseur relative à variation d'épaisseur selon l'invention (courbe Q) et d'un profil symétrique de 3,5% d'épaisseur relative à variation d'épaisseur NACA 16 (courbe R) pour un nombre de Mach de 0,92 et un coefficient de portance $C_z$ nul;

la fig. 6 montre schématiquement le squelette d'un profil ayant une loi de cambrure selon l'invention (l'échelle des ordonnées, représentant la cambrure rapportée à la corde, étant dilatée);

la fig. 7 est une vue générale d'un profil particulier de pale selon l'invention;

la fig. 8 est un diagramme montrant l'évolution du coefficient de traînée $C_x$ en fonction du nombre de Mach pour un profil selon l'invention (courbe U) et pour le profil connu NACA 16304 (courbe V), pour un coefficient de portance $C_z$ égal à 0,2;

la fig. 9 est un diagramme montrant l'évolution du coefficient de moment $C_m$ en fonction du coefficient de portance $C_z$ pour un profil conforme à l'invention (courbe A) et pour le profil connu NACA 16304 (courbe B) pour un nombre de Mach voisin de 0,85;

la fig. 10 est un diagramme illustrant l'évolution du coefficient de portance $C_z$ en fonction de l'incidence $\alpha$ pour un profil selon l'invention (courbe C) et pour le profil connu NACA 16304 (courbe D), pour un nombre de Mach égal à 0,6.

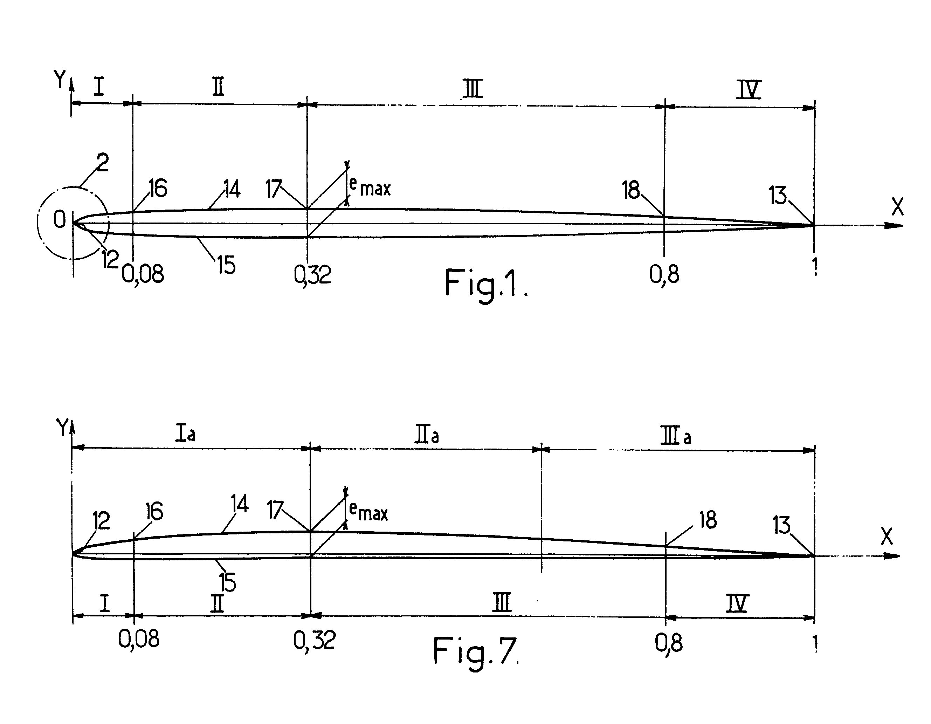

La fig. 1, qui est une représentation graphique d'une loi d'épaisseur suivant l'invention, peut être regardée comme montrant un profil symétrique ayant cette loi d'épaisseur: ce profil comporte un bord d'attaque 12 et un bord de fuite 13 reliés par un extrados 14 et un intrados 15 symétriques, convexes dans leur majeure partie mais concaves à proximité du bord de fuite 13. L'axe des abscisses Ox est confondu avec le squelette et la corde et l'origine O est confondue avec le bord d'attaque 12. L'axe Ox est orienté positivement du bord d'attaque 12 vers le bord de fuite 13, l'axe Oy étant orienté positivement de l'intrados 15 vers l'extrados 14. Le profil peut être regardé comme comportant quatre zones successives I, II, III et IV.

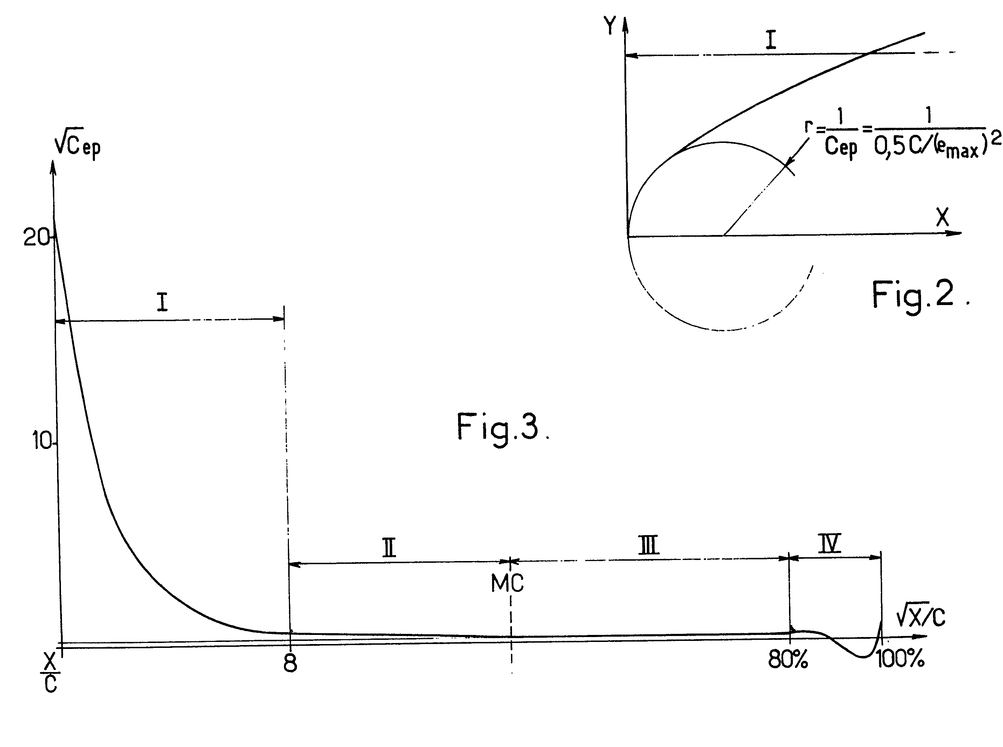

La première zone I débute au bord d'attaque 12, représenté à grande échelle sur la fig. 2. Cette première zone présente une décroissance rapide de la courbure. Dans le cas d'un bord d'attaque en forme d'arc de cercle, la première zone va avoir une courbure maximale correspondant au rayon du cercle. Dans la seconde zone II, la courbure décroît linéairement. On pourra fréquemment représenter la loi d'épaisseur, entre le bord d'attaque et le maître couple (extrémité de la zone II) par une formule du genre:

$$y = U_1 x^6 + U_2 x^5 + U_3 x^4 + U_4 x^3 + U_5 x^2 + U_6 x + U_7 U_7 x^{1/2} (1)$$

où $U_1, \ldots, U_7$ sont des coefficients constants, y et x étant rapportées à la longueur C de la corde.

Dans le cas où la seconde zone II s'étend jusqu'à 32% de la corde et où l'épaisseur maximale relative $e_{max}/C$ est égale à 0,035, les coefficients de la formule (1) ont approximativement les valeurs:

$U_1 = -44,937$
$U_2 = 49,052$
$U_3 = -19,232$
$U_4 = 3,0433$
$U_5 = -0,1028$
$U_6 = -0,0720$
$U_7 = -0,0649$

Sur les fig. 1 et 2, la courbure dans la première zone I décroît de $0,5\ C/e^2_{max}$ au bord d'attaque 12 jusqu'à $14 e_{max}/C$ en 16, situé à une abscisse réduite $x = 0,08$.

La seconde zone II, qui s'étend du point 16 à un point 17 où l'épaisseur du profil est maximale, situé avantageusement à une abscisse égale à environ 32% de la corde, présente une décroissance sensiblement linéaire de la courbure depuis une valeur $14 e_{max}/C$ au point 16 jusqu'à une valeur égale à $1,5 e_{max}/C$ au point 17, à la fin de la deuxième zone II, comme le montre la fig. 3.

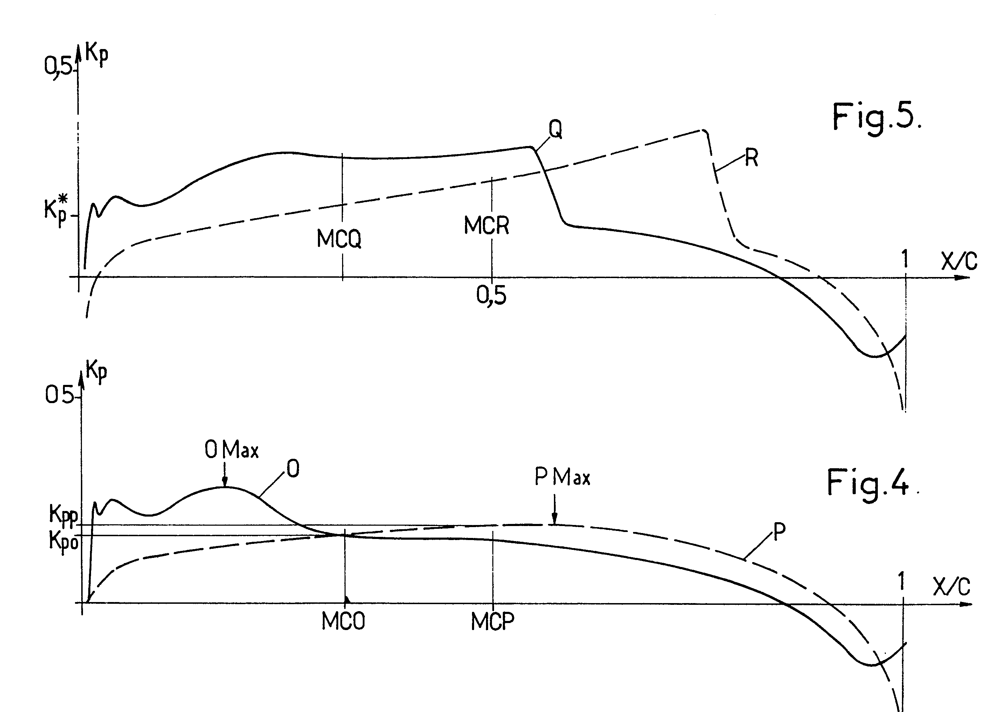

Grâce à cette évolution particulière de la courbure, on obtient un faible niveau de survitesses dans la zone avant du profil, jusqu'à environ x/C = 0,2 puis une recompression progressive sans choc jusqu'au maître couple, en 17. La courbe O de la fig. 4, correspondant à un nombre de Mach de 0,88, montre la valeur élevée du coefficient Kp jusqu'à 20% environ de la corde, et son maintien à une valeur supérieure à celle pour le profil NACA sur toute la seconde zone, terminée par le maître couple MCO situé beaucoup plus en avant que le maître couple MCP du profil NACA.

Cette distribution des courbures dans la zone II et celle dans la troisième zone allant du maître couple MCO à un point d'abscisse X/C = 80%, où la courbure est sensiblement constante et égale à la valeur au point 17 (fig. 1): assure un parfait contrôle de l'écoulement, même lorsque le nombre de Mach augmente, comme le montre la fig. 5 représentant la répartition de pression calculée pour un nombre de Mach de 0,92.

En effet, le développement de la zone supersonique avec le nombre de Mach s'effectue sans augmentation de la survitesse et l'intensité de l'onde de choc terminant cette zone supersonique reste modérée même à fort nombre de Mach. La fig. 5 montre que, comparée à la loi d'épaisseur d'un profil classique de la famille NACA 16, la loi d'épaisseur selon l'invention permet d'obtenir des ondes de choc moins intenses et situées plus en amont, ce qui retarde l'apparition du décollement de la couche limite et assure un faible niveau de traînée aux nombres de Mach élevés.

Enfin, la zone IV de l'extrados, qui s'étend entre le point 18 d'abscisse X/C = 0,80 et le bord de fuite 13 et qui comporte une inversion de courbure, située avantageusement au point d'abscisse x/C = 0,88, confère au profil selon l'invention une géométrie particulière au bord de fuite, caractérisée par une épaisseur presque constante et qui produit une légère accélération entre 95% de la corde et le bord de fuite, contribuant également à diminuer la traînée du profil et à retarder les décollements de la couche limite.

Les zones III et IV pourront être représentées par la formule (2) ci-après entre le maître couple et le bord de fuite:

$$y = U_8 x^7 + U_9 x^6 + U_{10} x^5 + U_{11} x^4 + U_{12} x^3 + U_{13} x^2 + U_{14} x + U_{15} (2)$$

Les coefficients constants $U_8 - U_{15}$ sont évidemment choisis en fonction de ceux de l'équation (1) pour assurer la continuité du profil au point 17. Ils peuvent avoir les valeurs suivantes dans le cas déjà envisagé d'une épaisseur relative $e_{max}/C = 0,035$ et d'un maître couple à 32% de la corde.

$U_8 = 8,4058$
$U_9 = -34,3764$
$U_{10} = 58,4983$
$U_{11} = -53,5964$
$U_{12} = 28,4971$
$U_{13} = -8,8134$
$U_{14} = 0,1472$
$U_{15} = -0,0852$

L'effet favorable de la loi d'épaisseur qui vient d'être définie est avantageusement complété par une loi de cambrure suivant un autre aspect de l'invention, qui permet d'atteindre d'excellentes performances aux portances élevées pour des nombres de Mach voisins de 0,6 correspondant aux régimes de montée et de décollage des hélices.

La loi de cambrure peut être représentée, comme la loi d'épaisseur, par une courbe dans un système d'axes dont l'axe Ox est confondu avec la corde et l'axe OA d'ordonnées est orienté de l'intrados vers l'extrados. Cette loi de cambrure peut être décomposée en trois zones représentées par des fonctions, par exemple polynominales.

– Une première zone $I_a$, entre le point de courbure maximale au bord d'attaque et le point de

cambrure maximale $p_o$ peut être défini approximativement par une relation du type:

$$a = m_1 x^3 + m_2 x^2 + m_3 x + m_4 x^{1/2} \qquad (3)$$

– Une deuxième zone $II_a$ comprise entre le point de cambrure maximale $p_o$ et un point situé approximativement à l'abscisse $x/C = 0{,}65$ peut être définie par une relation du type:

$$a = m_5 x^3 + m_6 x^2 + m_7 x + m_8 \qquad (4)$$

– Une troisième zone $III_a$, située entre le point d'abscisse $X/C = 0{,}65$ et le bord de fuite, peut être définie par une relation du type:

$$a = m_9 x^3 + m_{10} x^2 + m_{11} x + m_{12} \qquad (5)$$

les différents $m_i$ étant des coefficients constants et x étant l'abscisse rapportée à la corde du profil et a l'ordonnée rapportée à la corde du profil.

Si la projection sur la corde du point de cambrure maximale se trouve à 35% de la corde à partir du point de courbure maximale du bord d'attaque, c'est-à-dire $p_o = 0{,}35\,C$ et que la cambrure maximale $a_p$ est prise approximativement égale à $0{,}0136\,C$, les coefficients peuvent avoir les valeurs approximatives suivantes:

$$m_1 = \phantom{-}0{,}1589$$
$$m_2 = -0{,}2151$$
$$m_3 = \phantom{-}0{,}0874$$
$$m_4 = +0{,}00455$$
$$m_5 = \phantom{-}0{,}0694$$
$$m_6 = -0{,}1411$$
$$m_7 = \phantom{-}0{,}0730$$
$$m_8 = -0{,}0252$$
$$m_9 = -0{,}01869$$
$$m_{10} = \phantom{-}0{,}03069$$
$$m_{11} = -0{,}03876$$
$$m_{12} = \phantom{-}0{,}02676$$

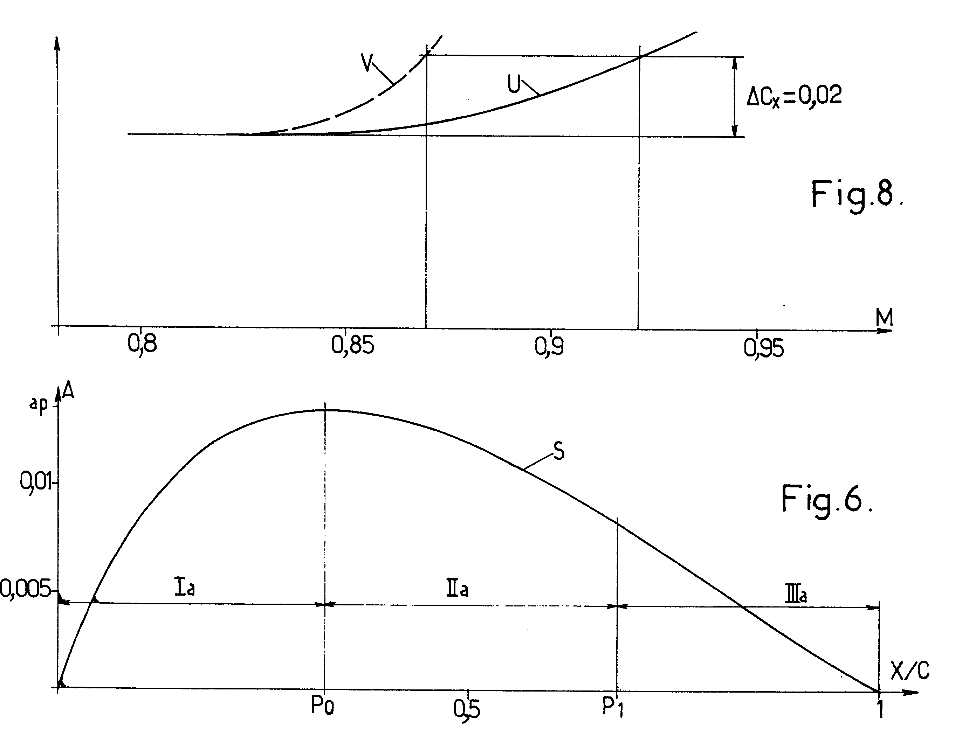

La fig. 6 montre la variation de la cambrure réduite a le long de la corde pour un profil conforme aux équations (3), (4) et (5) ci-dessus, et pour les valeurs des coefficients donnés à titre d'exemples, c'est-à-dire que les zones $I_a$, $II_a$ et $III_a$ de la ligne moyenne sont définies par les équations:

Courbe $I_a$:
$Y/C = 0{,}1589\ (X/C)^3 - 0{,}2151\ (X/C)^2 + 0{,}0874\ (X/C) + 0{,}0455\,X/C$

Courbe $II_a$:
$Y/C = 0{,}0694\ (X/C)^3 - 0{,}01411\ (X/C)^2 + 0{,}0730\ (X/C) + 0{,}00252$

Courbe $III_a$:
$Y/C = -0{,}01869\ (X/C)^3 + 0{,}03069\ (X/C)^2 - 0{,}03876\ (X/C) + 0{,}02676$

La conjugaison de cette ligne moyenne et d'une loi d'épaisseur selon l'invention permet d'obtenir des coefficients de portance maximale au moins égaux à ceux obtenus avec les profils classiques de la série NACA 16000, en même temps que des coefficients de moment beaucoup plus faibles, ce qui est favorable pour la tenue mécanique de la pale.

La fig. 7, où les éléments correspondant à ceux de la fig. 1 portent la même référence, montre un profil dissymétrique conforme à l'invention, c'est-à-dire associant une loi de cambrure et une loi d'épaisseur du genre donné ci-dessus.

A titre indicatif, la fig. 8 montre les résultats d'essais comparatifs en soufflerie effectués sur un profil suivant l'invention, du genre montré en fig. 7, et sur un profil classique de référence NACA 16304 (d'épaisseur relative maximale 4%). On voit sur la fig. 8 que l'augmentation de traînée en fonction du nombre de Mach est de beaucoup retardée sur le profil suivant l'invention (courbe U) comparativement au profil NACA (courbe V). Le gain en Mach sur la divergence de traînée (correspondant à un accroissement de traînée $\Delta C_x = 0{,}002$ par rapport à la traînée initiale) est de 5% environ.

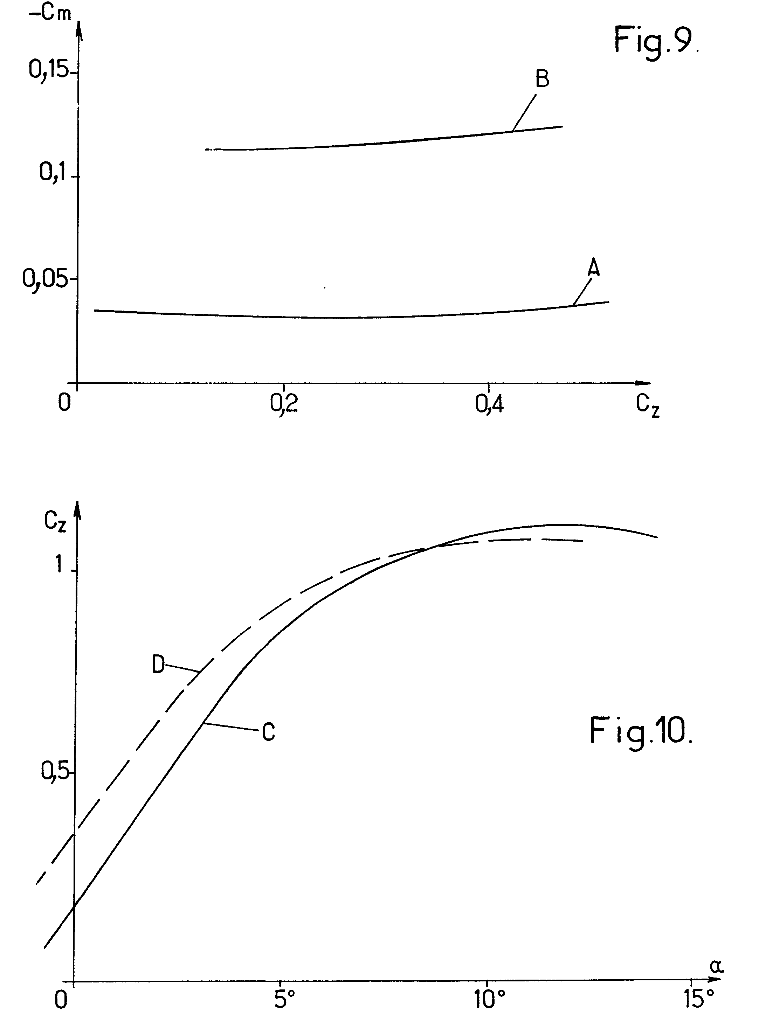

La fig. 9 montre qu'il y a également un gain sur le coefficient de moment $C_m$. Les courbes, qui donnent la variation du coefficient de moment $C_m$ en fonction de la portance $C_z$ pour Mach 0,85, font apparaître une réduction du moment de 70% environ (courbe A) par rapport au profil NACA (courbe B).

Enfin, la fig. 10, qui donne les valeurs de portance $C_z$ obtenues pour diverses incidences à l'aide du profil suivant l'invention (courbe C) et pour le profil de référence (courbe D) font apparaître que les niveaux de portance sont sensiblement les mêmes, donc que le gain sur les autres caractéristiques ne s'accompagne d'aucune dégradation de la portance.

L'invention permet donc de définir les profils successifs d'une pale d'hélice à hautes performances applicables à tout type de propulseur d'aéronef. Une fois la loi de cambrure choisie et la ligne moyenne tracée, il suffit de reporter, orthogonalement à la ligne moyenne, la loi d'épaisseur selon la technique classique utilisée également pour les profils NACA, en tenant compte de l'épaisseur maximale relative choisie.

Dans le cas où l'on utilise une représentation de la courbure et de l'épaisseur par les fonctions (I) à (6) mentionnées ci-dessus, et où les coefficients sont ceux donnés à titre d'exemples plus haut, l'extrados et l'intrados du profil ont les valeurs réduites approximatives suivantes:

| Intrados | | Extrados | |
|---|---|---|---|
| X/C | Y/C | X/C | Y/C |
| 0.000000 | 0.000000 | 0.000000 | 0.000000 |
| .001360 | .002220 | .000130 | .000620 |
| .005510 | .003730 | .003100 | .003800 |
| .009720 | .004450 | .007930 | .006340 |
| .014460 | .004940 | .013800 | .008310 |
| .020150 | .005390 | .021120 | .010420 |
| .027050 | .005720 | .030210 | .012470 |

| Intrados | | Extrados | |
|---|---|---|---|
| X/C | Y/C | X/C | Y/C |
| .035500 | .005920 | .041340 | .014520 |
| .045810 | .006010 | .054840 | .016610 |
| .058310 | .006000 | .071010 | .018750 |
| .073300 | .005940 | .090150 | .020940 |
| .091100 | .005830 | .112580 | .023190 |
| .112020 | .005680 | .138570 | .025320 |
| .136330 | .005560 | .168400 | .027310 |
| .182980 | .005070 | .202290 | .028970 |
| .232260 | .004640 | .240450 | .030080 |
| .298850 | .004220 | .282970 | .030690 |
| .366270 | .004130 | .329920 | .030930 |
| .453370 | .004550 | .381220 | .030680 |
| .537290 | .004920 | .448230 | .029670 |
| .639470 | .005110 | .545630 | .026850 |
| .717880 | .005010 | .636240 | .023150 |
| .782170 | .004600 | .741590 | .017590 |
| .843260 | .003730 | .805450 | .013680 |
| .898590 | .002410 | .565080 | .009540 |
| .945070 | .000930 | .917670 | .005340 |
| .979200 | .000840 | .960020 | .002450 |
| 1.000000 | .001290 | 1.000000 | .001290 |

Comme on l'a déjà indiqué plus haut, les profils selon l'invention seront généralement utilisés uniquement dans la partie externe des pales d'hélices, à partir du rayon relatif 0,6 et même souvent du rayon relatif 0,7 seulement. La partie interne pourra par exemple présenter un profil NACA série 65 à l'emplanture et une zone de raccordement à proximité des profils suivant l'invention. L'épaisseur relative pourra également évoluer depuis l'emplanture jusqu'à l'extrémité de pale. Pour une application en régime transsonique, les pales d'hélices présenteront généralement un angle de flèche variable, augmentant notablement dans la partie externe de la pale. On peut ainsi arriver à étendre jusqu'à des nombres de Mach de croisière de 0,85 environ le domaine d'utilisation des hélices.

## Revendications

1. Pale d'hélice propulsive pour aéronef ayant différents profils le long de la pale, caractérisée en ce que le profil de la pale, dans la partie externe de ladite pale, a une loi d'épaisseur représentée par une courbe dont la courbure décroît de façon continue, depuis une valeur maximale au bord d'attaque (12), dans une première zone (I) qui s'étend jusqu'à une fraction de la longueur de la corde du profil comprise entre 7 et 10%, et décroît, dans une seconde zone (II) faisant suite à la première et s'étendant jusqu'au maître couple du profil avec un taux de décroissance constant qui est égal au taux de décroissance à l'extrémité de la première zone et qui est faible comparé au taux moyen de décroissance dans la première zone.

2. Pale selon la revendication 1, caractérisée en ce que la deuxième zone s'étend jusqu'à un point situé entre 28 et 35% de la longueur de la corde à partir du bord d'attaque.

3. Pale selon la revendication 2, caractérisée en ce que la seconde zone (II) s'étend sur une fraction de la longueur de la corde comprise entre 28 et 32% à partir du bord d'attaque.

4. Pale selon l'une quelconque des revendications précédentes, caractérisée en ce que la courbure de la loi d'épaisseur au bord d'attaque (12) est $0,5\ C/(e_{max})^2$ et décroît jusqu'à une valeur égale à $14e_{max}/C$ à l'extrémité de la première zone (I).

5. Pale selon la revendication 4, caractérisée en ce que la courbure de la loi d'épaisseur est égale à $1,5e_{max}/C$ à la fin (17) de la seconde zone (II).

6. Pale selon l'une quelconque des revendications précédentes, caractérisée en ce que la courbure de la loi d'épaisseur est sensiblement constante sur une troisième zone (III) allant du maître couple jusqu'à 75 à 85% de la corde à partir du bord d'attaque et présente une inversion dans une quatrième zone (IV) allant jusqu'au bord de fuite (13).

7. Pale selon la revendication 6, caractérisée en ce que la quatrième zone (IV) s'étend entre 80% environ de la corde et le bord de fuite et comporte une inversion de courbure entre 90% de la corde et le bord de fuite.

8. Pale selon l'une quelconque des revendications précédentes, caractérisée en ce que le profil présente une cambrure maximale $a_p$ comprise entre 0,75 et 0,85 $a_c$, $a_c$ représentant la cambrure maximale d'un profil NACA classique.

9. Pale selon la revendication 8, caractérisée en ce que la ligne moyenne présente une cambrure maximale en un point situé à 35% de la corde à partir du bord d'attaque.

10. Pale selon la revendication 8 ou 9, caractérisée en ce que la loi de variation de la cambrure est représentée par trois fonctions différentes dans trois zones successives à partir du bord d'attaque.

11. Pale selon l'une quelconque des revendications précédentes, caractérisée en ce que ledit profil présente une épaisseur relative comprise entre 2 et 6%, avantageusement de l'ordre de 3,5%.

12. Hélice d'aéronef, comportant des pales avec un profil suivant l'une quelconque des revendications précédentes, caractérisé par le fait d'avoir un tel profil sur une zone externe à partir de 70% au moins du rayon.

## Patentansprüche

1. Flugzeugpropellerblatt, das in seiner Längsrichtung unterschiedliche Profile aufweist, dadurch gekennzeichnet, dass die Dicke des Blattprofils im äusseren Teil des Blatts einer Gesetzmässigkeit folgt, die sich in einer Kurve darstellt, deren Krümmung in einer ersten Zone (I), die sich bis zu einem zwischen 7% und 10% liegenden Teil der Länge der Profilsehne erstreckt, von einem Maximalwert an der Vorderkante (12) des Blatts kontinuierlich abnimmt und in einer an die erste Zone anschliessenden zweiten Zone (II), die sich bis zu dem Hauptspant des Profils erstreckt, mit einer konstanten Verringerungsrate abnimmt, die gleich der Verringerungsrate am Ende der ersten Zone und klein gegenüber der mittleren Verringerungsrate in der ersten Zone ist.

2. Propellerblatt nach Anspruch 1, dadurch gekennzeichnet, dass die zweite Zone sich bis zu einem Punkt erstreckt, dessen Abstand von der Vorderkante zwischen 28% und 35% der Sehnenlänge beträgt.

3. Propellerblatt nach Anspruch 2, dadurch gekennzeichnet, dass die zweite Zone (II) sich von der Vorderkante aus über einen zwischen 28% und 32% liegenden Teil der Sehne erstreckt.

4. Propellerblatt nach einem der vorhergehenden Ansprüche, dadurch gekennzeichnet, dass die Krümmung der den Verlauf der Dicke wiedergebenden Kurve an der Vorderkante (12) $0.5C/(e_{max})^2$ beträgt und bis auf einen Wert von $14e_{max}/C$ am Ende der ersten Zone (I) abnimmt.

5. Propellerblatt nach Anspruch 4, dadurch gekennzeichnet, dass die Krümmung der den Verlauf der Dicke wiedergebenden Kurve am Ende (17) der zweiten Zone (II) $1.5e_{max}/C$ beträgt.

6. Propellerblatt nach einem der vorhergehenden Ansprüche, dadurch gekennzeichnet, dass die Krümmung der den Verlauf der Dicke wiedergebenden Kurve über eine dritte Zone (III), die von dem Hauptspant bis zu einem Punkt reicht, dessen Abstand von der Vorderkante 75% bis 85% der Sehnenlänge beträgt, annähernd konstant ist und in einer bis zur Hinterkante (13) reichenden vierten Zone (IV) eine Umkehrung erfährt.

7. Propellerblatt nach Anspruch 6, dadurch gekennzeichnet, dass die vierte Zone (IV) sich zwischen annähernd 80% der Sehnenlänge und der Hinterkante erstreckt und zwischen 90% der Sehnenlänge und der Hinterkante eine Krümmungsumkehrung stattfindet.

8. Propellerblatt nach einem der vorhergehenden Ansprüche, dadurch gekennzeichnet, dass das Profil eine zwischen $0.75a_c$ und $0.85a_c$ liegende maximale Wölbung $a_p$ besitzt, wobei $a_c$ die maximale Wölbung eines klassischen NACA-Profils ist.

9. Propellerblatt nach Anspruch 8, dadurch gekennzeichnet, dass die Mittellinie in einem Punkt eine maximale Wölbung besitzt, der von der Vorderkante aus gemessen bei 35% der Sehnenlänge liegt.

10. Propellerblatt nach Anspruch 8 oder 9, dadurch gekennzeichnet, dass die Gesetzmässigkeit der Wölbungsänderung in drei von der Vorderkante aus aufeinanderfolgenden Zonen durch drei verschiedene Funktionen gegeben ist.

11. Propellerblatt nach einem der vorhergehenden Ansprüche, dadurch gekennzeichnet, dass das Profil eine zwischen 2% und 6%, vorzugsweise bei etwa 3,5% liegende relative Dicke besitzt.

12. Flugzeugpropeller mit Blättern mit einem Profil nach einem der vorhergehenden Ansprüche, dadurch gekennzeichnet, dass er dieses Profil auf einer Aussenzone von wenigstens 70% des Halbmessers aus aufweist.

## Claims

1. Propulsive propeller blade for aircraft, having different profiles along the blade, characterized in that the profile of the blade, in the external part of said blade, has a thickness law represented by a curve whose curvature continuously decreases from a maximum value at the leading edge (12) in a first zone (I) which extends up to a fraction of the length of the chord of the profile of from 7 to 10% and further decreases, in a second zone (2) following the first zone and extending up to the midship of the profile with a constant decreasing rate which is equal to the decreasing rate at the end of the first zone and which is low as compared to the average decreasing rate in the first zone.

2. Blade according to claim 1, characterized in that the second zone extends up to a point situated between 28 and 35% of the length of the chord from the leading edge.

3. Blade according to claim 2, characterized in that the second zone (II) extends over a fraction of the length of the chord approximately between 28 and 32% from the leading edge.

4. Blade according to any one of the preceding claims, characterized in that the curvature of the thickness law at the leading edge (12) is about $0.5 C/(e_{max})^2$ and decreases to a value equal to $14e_{max}/C$ at the end of the first zone (I).

5. Blade according to claim 4, characterized in that the curvature of the thickness law is equal to $1.5e_{max}/C$ at the end of the second zone (II).

6. Blade according to any one of the preceding claims, characterized in that the curvature of the thickness law is substantially constant over a third zone (III) from the midship to a location between 75 and 80% of the chord from the leading edge and presents an inversion in a fourth zone (IV) going as far as the trailing edge (13).

7. Blade according to claim 6, characterized in that the fourth zone (IV) extends between about 80% of the zone and the trailing edge and has a curvature inversion between 90% of the chord and the trailing edge.

8. Blade according to any one of the preceding claims, characterized in that the profile has a maximum camber $a_p$ of from 0.75 to 0.85 $a_c$, $a_c$ representing the maximum camber of a conventional NACA profile.

9. Blade according to claim 8, characterized in that the mean line of the blade exhibits a maximum camber at a point situated at 35% of the chord from the leading edge.

10. Blade according to claims 8 or 9, characterized in that the law of variation of the camber is represented by three different functions in three successive zones from the leading edge.

11. Blade according to any one of the preceding claims, characterized in that said profile has a relative thickness of from 2 to 6%, advantageously of about 3.5%.

12. Aircraft propeller comprising blades with a profile according to any one of the preceding claims, characterized in that it has such a profile over a radially outer zone, from at least 70% of the radius.

Fig.1.

Fig.7.

0 110 766

Fig.2.

$$r = \frac{1}{C_{ep}} = \frac{1}{0,5 \, C/(e_{max})^2}$$

Fig.3.

0110766

Fig.5.

Fig.4.

Fig.8.

$\Delta C_x = 0,02$

Fig.6.

−Cm

Fig.9.

0,15

B

0,1

0,05

A

0          0,2          0,4          Cz

Cz

Fig.10.

1

D

C

0,5

0          5°          10°          15°          α